# EUROPEAN PATENT SPECIFICATION

(11) **EP 0 968 252 B1**
(45) Date of publication and mention of the grant of the patent: **06.06.2001**
(21) Application number: 98906915.8
(22) Date of filing: 04.02.1998
(51) Int. Cl.: C09K 3/10

(54) **SEALING COMPOUND AND ITS USE FOR PRODUCING PRESSURE-TIGHT CONTAINERS**
DICHTUNGSMASSE UND DEREN VERWENDUNG BEI DER HERSTELLUNG DRUCKDICHTER BEHÄLTER
COMPOSE D'ETANCHEITE ET UTILISATION DE CE DERNIER POUR PRODUIRE DES RECIPIENTS ETANCHES A LA PRESSION

(30) Priority: 08.02.1997 DE 19704810
(43) Date of publication of application: 05.01.2000
(73) Proprietor: PPG Industries Ohio, Inc., Cleveland, OH 44111 (US)
(72) Inventor: NÜSSEN, Peter, D-48163 Münster (DE); PETERS, Jens, D-48165 Münster (DE)
(74) Representative: Sternagel, Fleischer, Godemeyer & Partner Patentanwälte
(86) International application number: EP9800604
(87) International publication number: WO9834993

(56) References cited:
- EP-A- 0 328 337
- EP-B- 0 546 051
- DE-A- 3 113 692
- DE-A- 4 138 561
- GB-A- 2 051 660
- NL-C- 72 970
- US-A- 3 772 237
- US-A- 4 416 386
- US-A- 4 540 731
- US-A- 5 248 562
- DATABASE WPI Section Ch, Week 8922 Derwent Publications Ltd., London, GB; Class A14, AN 89-161930 XP002067180 & JP 01 104 683 A (AISHIN KAKO KK)
- DATABASE WPI Section Ch, Week 9426 Derwent Publications Ltd., London, GB; Class A95, AN 94-210989 XP002067181 & JP 06 145 647 A (NIPPON TOKUSHU TORYO CO LTD)
- DATABASE WPI Section Ch, Week 9608 Derwent Publications Ltd., London, GB; Class A14, AN 96-075101 XP002067182 & JP 07 331 034 A (AISHIN KAKO KK)

## Description

The present invention relates to a sealing compound based on polyvinyl chloride plastisols.

The present invention relates additionally to processes for preparing the sealing compound, to processes for producing closures, especially for the pressure-tight closing of packaging containers, using this sealing compound, and to such closures.

Sealing compounds based on polyvinyl chloride plastisols (referred to below for short as PVC plastisols) and their use for producing closures for packaging containers has been known for a long time. These sealing compounds are described, for example, in DE-B-20 03 693 and in K. Weinmann, "Beschichten mit Lacken und Kunststoffen", 1967, Verlag W.A. Colomb, Stuttgart.

In the field of pressure-tight containers, especially for the transportation and storage of liquid products, such as of paints and varnishes and other industrial goods subject to labeling obligations (e.g. chemicals or other environmentally hazardous goods), there is an increased demand for containers which meet the appropriate standards with respect to tightness even without an additional clamping ring. At the same time, however, these containers should also be easy to open without the use of special tools.

Consequently, EP-B-546 051 proposed applying, to an already applied sealing compound based on PVC, an adhesive which ensures both the sealing of the containers without an additional clamping ring and the trouble-free opening of the containers.

This solution proposed in EP-B-546 051, however, has a number of disadvantages. For instance, the additional application of an adhesive requires another process step in producing the closures, which is associated with further costs and is highly time-consuming. Furthermore, there is the possibility that after the containers have been opened/closed a number of times constituents of the adhering layer will enter the contents, leading to complaints on the part of the filling plants.

German Patent Application P 196 53 914.5, which is not a prior publication, for solving this problem describes sealing compounds based on a blocked isocyanate and an amine and comprising from 1 to 40% by weight of at least one adhesive.

The present invention is based, accordingly, on the object of providing a sealing compound based on PVC, which allows the production of pressure-tight containers, the containers being intended to meet the corresponding standards (for example, German Hazardous Goods Ordinance Rail and Hazardous Goods Ordinance Road, Appendix A5) in relation to pressure-tightness without the use of an additional clamping ring and without the additional application of an adhesive to the sealing compound. Furthermore, the sealing compound should feature little or no migration of the constituents of the sealing compound into the packaged product. In addition, the sealing compound should also meet the other requirements commonly set, for example in relation to chemical resistance and elasticity. Finally, the sealing compound should be able to be applied and cured on the existing lines.

This object is surprisingly achieved by a sealing compound based on PVC plastisols, which comprises from 0.1 to 40% by weight, based on the overall weight of the sealing compound, of one or more adhesives.

Further subjects of the present invention are processes for preparing the sealing compound, processes for producing closures, especially for the pressuretight closing of packaging containers, using this sealing compound, and such closures.

It is surprising and was not foreseeable that with the aid of the sealing compound according to the invention it is possible to produce pressure-tight containers which comply with the standards customarily set for such containers even without an additional clamping ring and without the additional application of an adhesive. At the same time it is also surprising that the sealing compound, and especially the adhesive component, exhibits extremely little if any migration into the product, either during storage of the containers or after the containers have been opened. Moreover, it is advantageous that by virtue of the addition of component (F) the properties of the sealing compound, for example in respect of chemical resistance and elasticity, suffer little or no significantly adverse effect. Another advantage, finally, is that the sealing compound can be applied on the lines that are conventionally employed.

In the following text, then, the individual constituents of the sealing compound according to the invention will first of all be detailed.

Sealing compounds based on PVC plastisols have been known, and also available commercially in large numbers, for a long time. Sealing compounds suitable in principle for preparing the sealing compounds according to the invention are all those based on PVC plastisol. However, especially in the case of foamed sealing compounds, a special selection of the individual constituents of the sealing compounds may be necessary.

It is essential to the invention that the sealing compound according to the invention comprises from 0.1 to 40% by weight, preferably from 5 to 25% by weight, based in each case on the overall weight of the sealing compound, of one or more adhesives (Component (F)).

Adhesives suitable for use in the sealing compound of the invention are in principle all adhesives, especially all adhesives which at room temperature are liquid or highly viscous. The component (F) in this case can also be employed in the form of a liquid or highly viscous solution or dispersion. So-called hotmelt adhesives are also suitable in principle.

The component (F) is generally selected such that following the application of the sealing compound at least part of component (F) is on the surface of the sealing compound and ensures enhanced adhesion, or an improvement in adhesion, of the sealing compound to the counterpart of the closure (e.g. metal or further sealing compound).

In the sealing compound according to the invention it is possible, for example, to employ adhesives based on tall resins and/or colophony resins. The adhesive employed in the sealing compound of the invention preferably comprises low molecular mass. branched or - preferably - linear, or substantially linear, homo- and/or copolymers of aliphatic, ethylenically unsaturated hydrocarbons having 2 to 6 C atoms, such as, for example, polybutene and/or polyisobutylene or polyisobutene and/or ethylene-propylene copolymers and/or ethylene-vinyl acetate copolymers.

In addition to the adhesive component (F) the sealing compounds of the invention usually also include one or more polyvinyl chloride homo- and/or copolymers, preferably in an amount of from 10 to 80% by weight, with particular preference from 30 to 65% by weight. based in each case on the overall weight of the sealing compound.

In addition to PVC homopolymers. it is also possible, for example, to employ copolymers of PVC with one or more other monomers, such as maleic acid. ethylene-vinyl acetate, vinyl acetate, acrylonitrile and/or vinylidene chloride, for example.

The polyvinyl chloride polymers employed in the sealing compounds according to the invention can have been prepared, for example, by means of the known techniques of emulsion, suspension. microsuspension or bulk polymerization. In this context it is preferred to employ PVC polymers that have been prepared by means of emulsion or microsuspension polymerization. These techniques are known and therefore require no further explanation.

Preference is given to employing PVC polymers which have a K value of from 60 to 90, with particular preference from 65 to 80.

It is also possible, for example, to employ the commercially available products such as, for example, Vinnolit® P 70 from Vinnolit Kunststoff GmbH, Germany, Solvic 372 HA from Solvay and Evipol EP 6762 from European Vinyls Corporation Deutschland, Frankfurt. In some cases these products include an emulsifier as well.

In addition, the sealing compound according to the invention normally includes one or more plasticizers (component (B)), preferably in an amount of from 10 to 80% by weight, with particular preference from 24 to 60% by weight, based in each case on the overall weight of the sealing compound.

Examples thereof are, in particular, low molecular mass plasticizers, preferably plasticizers based on low molecular mass esters of mono-. di- and/or oligocarboxylic acids, such as phthalates. citrates, sebacates, octoates. Particular preference is given in this context to the use of phthalate plasticizers. In addition it is also possible. of course, to employ polymer plasticizers, such as polyesters, such as polyadipates and polysebacates, for example. Also suitable for use are the polymer plasticizers obtainable commercially, for example, under the trade names. Palamoll and Unimoll.

The sealing compound of the invention usually includes, furthermore, one or more modifiers (component (C)), preferably in an amount of from 1 to 70% by weight, particularly preferably from 4 to 40% by weight, based in each case on the overall weight of the sealing compound.

Through the selection of the nature and quantity of these modifiers it is possible to exert control over the properties of the sealing compound, for example its flexibility. This, however, is known to the skilled worker, and the nature and amount of these modifiers that is most favorable in each case can be readily determined with the aid of a few routine experiments.

Examples of suitable modifiers are pulverulent or liquid polymers other than the components (A), (B) and (F), such as, for example, epoxidized, unsaturated, fatty oils, such as epoxidized soya oil, epoxidized linseed oil or epoxidized safflower oil, acrylate polymers or acrylate copolymers, acrylonitrile polymers and acrylonitrile-butadiene copolymers.

As a further constituent the sealing compound also contains from 0 to 60% by weight, preferably from 0 to 30% by weight, based in each case on the overall weight of the sealing compound, of pigments and/or fillers, such as, for example, titanium dioxide, synthetic iron oxides, organic pigments, such as phthalocyanines, tartrazines, ultramarine blue. Pigment Yellow 83. Pigment Orange 43, Pigment Orange 5. Pigment Red 4 and also magnesium silicates and aluminum silicates. amorphous and pyrogenic silica, barium sulfate, carbon black, talc, kaolin and chalk (component (D)).

Finally, the sealing compound according to the invention may also include from 0 to 35% by weight, preferably from 1 to 20% by weight, based on the overall weight of the sealing compound, of further auxiliaries and additives (component (E)). Examples of these are commonly employed auxiliaries and additives such as silicone oils and fatty acids, for example.

In addition, stabilizers can be added to the sealing compound as component (E) in order to reduce the damaging effects of light, oxygen and heat. Examples of suitable stabilizers are compounds which react with or neutralize HC1, if such groups are eliminated from the PVC. Examples of suitable stabilizers are calcium stearate. zinc stearate, magnesium stearate, aluminum stearate, calcium laurate, calcium ricinoleate, zinc ricinoleate, barium laurate.

Also employed as component (E), for example, are waxes and silicas for obtaining certain flow properties (thixotropic agents) and, in the case of foamed sealing compounds, blowing agents, such as azodicarboxamides or sulfohydrazides, for example.

Preferably, however, the sealing compound according to the invention contains less than 1% by weight of lubricants, and with particular preference essentially none at all, since the lubricants commonly employed reduce the adhesiveness of the sealing compound.

Preferably the sealing compound according to the invention is essentially phthalate-free.

The sealing compound is employed principally for use in closures for pressure-tight containers of the type specified at the outset. Alternatively, it can be employed as a foamed sealing compound. In general, the foaming of the sealing compounds brings about a reduction in the Shore A hardness (measured in accordance with DIN 53 505). an increase in the flexibility, a more favorable weight/volume ratio, and an improved sealing function owing to better deformability. The addition of foaming agents generally has little effect on the adhesiveness of the sealing compound. The addition of the adhesive may, however, influence the foaming characteristics. In this case it is necessary to take appropriate formulation measures, such as, for example, the use of decomposition accelerants.

The preparation of the sealing compound takes place by mixing the individual components, with or without first adding the insoluble constituents, for example pigments, to the component (A) and - where necessary - carrying out dispersion using the dispersing equipment customary in the coating industry. In the case of the preparation of non-foamed sealing compounds, mixing or dispersing is usually carried out under vacuum. The sealing compound prepared in this way generally has Shore A hardnesses (DIN 53 505) of between 20 and 90, preferably between 25 and 70.

The amount in which the sealing compound is applied depends on the geometry of the closure part, on the intended use of the packaging, and on whether the sealing compound is foamed or not. For use in pressure-tight containers, the sealing compound according to the invention is usually applied in a coat thickness of from 0.2 to 20 mm, preferably from 1 to 10 mm.

To produce the closures in accordance with the process according to the invention, the above-described sealing compound is applied to the closures, preferably by means of the known "injection process". In this process, the sealing compound is injected or pressed at slightly elevated temperature, usually from about 20 to 40°C. in the uncured, paste-like state, from one or more nozzles into the closure parts, which are set in rotation at high speed using a suction cup. Owing to the centrifugal forces, the sealing compound is transferred in the desired contour and form. After this inflow is complete, the sealing compound is cured at temperatures between 150°C and 240°C for a drying time of from 1 to 5 min (conditions depending on formulation). Drying, and the equipment employed for it, are likewise known and therefore require no further explanation here.

The closure which is to be coated with the sealing compound is understood as meaning all parts of the packaging material which are connected to the body of the packaging. In particular, however, the sealing compounds are applied in pressure-tight containers as are employed for the transportation and storage of liquid products, for example paints and varnishes, or other chemicals (for example, goods subject to labeling requirements, which in some circumstances may be environmentally hazardous). The sealing compound according to the invention is suitable, for example, for application in the containers described in EP-B-546 051, with a tight seal being ensured without an additional clamping ring and without the additional application of an adhesive.

These closures may consist of metals, such as aluminum, black plate, tinplate and various ferrous alloys, to which a passivating layer based on nickel compounds, chromium compounds and tin compounds may have been applied. In the process according to the invention the sealing compound can be applied to coated closures, but in particular, owing to its good adhesion to metals, can also be applied to uncoated closures.

Suitable coating compositions are the coating materials, common in the packaging industry, based on epoxy-phenolic resin, acrylate resin, polyesters or organosols. However, these coating materials are known (cf. e.g. H. Kittel, Lehrbuch der Lacke und Beschichtungen, Volume IV, Lack- und Beschichtungssysteme, Formulierung, Verlag W.A. Colomb in der H. Heenemann GmbH, Berlin-Oberschwandorf 1976) and hence require no more detailed description here.

The invention is illustrated below with reference to working examples. Unless expressly stated otherwise, all indications as to parts and percentages are by weight.

### Examples 1 and 2

First of all, the sealing compounds 1 and 2 are prepared by mixing the components indicated in Table 1. These sealing compounds are assessed for their appearance, their adhesiveness (tack; manually) and their exudation behavior (manually and visually). The results of these examinations are set out in Table 2.

### Comparative Example 1

An adhesive-free sealing compound V1 is prepared from the components indicated in Table 1, and tested, in accordance with Example 1. The test results are likewise set out in Table 2.

**Table 1:**

| Composition of the sealing compounds of Examples 1 and 2 and of Comparative Example 1, in parts | | | |
|---|---|---|---|
| | Ex. 1 | Ex. 2 | Comp. Ex. 1 |
| Epoxid. soya oil¹⁾ | 25.0 | 25.0 | 20.0 |
| TiO₂²⁾ | 1.2 | 1.2 | 1.2 |
| BaSO₄³⁾ | 10.9 | 11.3 | 10.0 |
| Stabiliz.⁴⁾ | 0.5 | 0.5 | 0.1 |
| Plasticizer 1⁵⁾ | 2.0 | 2.0 | 2.0 |
| Plasticizer 2⁶⁾ | 5.0 | 5.0 | 15.0 |
| Blowing agent⁷⁾ | 0.4 | - | 0.4 |
| Silicone oil⁸⁾ | - | - | 1.0 |
| PVC⁹⁾ | 45.0 | 45.0 | 49.9 |
| PIB¹⁰⁾ | 10.0 | 10.0 | - |
| Total | 100.0 | 100.0 | 100.0 |

| | | | |
|---|---|---|---|
| Key to Table 1: ¹⁾: commercial epoxidized soya oil | | | |
| ²⁾: commercial titanium dioxide | | | |
| ³⁾: commercial barium sulfate | | | |
| ⁴⁾: commercial stabilizer | | | |
| ⁵⁾: commercial plasticizer based on dioctyl sebacate | | | |
| ⁶⁾: commercial plasticizer based on a neutral ester of a monocarboxylic acid | | | |
| ⁷⁾: commercial blowing agent based on azodicarboxamide | | | |
| ⁸⁾: commercial silicone oil having a viscosity of 340 cPs at 25°C | | | |
| ⁹⁾: commercial polyvinyl chloride emulsion polymer at low viscosity, having a K value of 68 and containing emulsifiers | | | |
| ¹⁰⁾: commercial, low molecular mass polyisobutylene, liquid at room temperature and having a number-average molecular weight of 1300, a density at 20°C of 0.89 g/cm³ and a viscosity at 100°C of about 500 mm²/s | | | |

**Table 2:**

| Test results of the sealing compounds | | | |
|---|---|---|---|
| | Ex. 1 | Ex. 2 | Comp. 1 |
| Appearance¹⁾ | sat. | sat. | sat. |
| Tack²⁾ | sat. | sat. | Unsat. |
| Exudation ³⁾ | sat. | sat. | - |

| | | | |
|---|---|---|---|
| Key to Table 2: ¹⁾ : The appearance, in the case of foamed compounds including the foam structure, was assessed visually (sat. = satisfactory; unsat. = unsatisfactory). | | | |
| ²⁾: The tack was assessed manually (finger test) (sat. = satisfactory; unsat. = unsatisfactory). | | | |
| ³⁾: The exudation was assessed manually and visually (sat. = satisfactory; unsat. = unsatisfactory). | | | |

## Claims

1. A sealing compound based on PVC plastisols, wherein the sealing compound comprises from 0.1 to 40% by weight, based on the overall weight of the sealing compound, of one or more adhesives.

2. A sealing compound as claimed in claim 1, which comprises from 5 to 25% by weight, based on the overall weight of the sealing compound, of one or more adhesives.

3. A sealing compound as claimed in claim 1 or 2, which comprises
A) from 10 to 80% by weight, of one or more polyvinyl chloride homo- and/or copolymers,
B) from 10 to 80% by weight, of one or more plasticizers,
C) from 1 to 70% by weight, of one or more modifiers,
D) from 0 to 60% by weight, of one or more pigments and/or fillers,
E) from 0 to 35% by weight, of one or more auxiliaries and/or additives and
F) from 0.1 to 40% by weight, of one or more adhesives,
the sum of the proportions by weight of components (A) to (F) being in each case 100% by weight.

4. A sealing compound as claimed in one of claims 1 to 3, which comprises one or more adhesives which at room temperature are liquid or highly viscous.

5. A sealing compound as claimed in one of claims 1 to 4, which comprises polybutene and/or polyisobutene as adhesive.

6. A sealing compound as claimed in one of claims 1 to 5, which is essentially phthalate-free.

7. A sealing compound as claimed in one of claims 1 to 6, which comprises a polyvinyl chloride homopolymer having a K value of from 60 to 90.

8. A sealing compound as claimed in one of claims 1 to 7, which comprises epoxidized soya oil as modifier.

9. A process for preparing sealing compounds as claimed in one of claims 1 to 8 by mixing and, if desired, dispersing the individual constituents.

10. A process for producing closures, in which a sealing compound is applied to the closures and baked, wherein a sealing compound as claimed in one of claims 1 to 8 is applied.

11. A closure for packaging containers, which is obtainable by a process as claimed in claim 10.

12. The use of a PVC plastisol which comprises from 0.1 to 40% by weight, based on the overall weight of the plastisol, of one or more adhesives, as a sealing compound.

## Patentansprüche

1. Dichtungsmasse auf der Basis von PVC-Plastisolen, dadurch gekennzeichnet, dass die Dichtungsmasse 0,1 bis 40 Gew.-%, bezogen auf das Gesamtgewicht der Dichtungsmasse, eines oder mehrerer Klebstoffe enthält.

2. Dichtungsmasse nach Anspruch 1, dadurch gekennzeichnet, dass sie 5 bis 25 Gew.-%, bezogen auf das Gesamtgewicht der Dichtungsmasse, eines oder mehrerer Klebstoffe enthält.

3. Dichtungsmasse nach Anspruch 1 oder 2, dadurch gekennzeichnet, dass sie
A) 10 bis 80 Gew.-% eines oder mehrerer Polyvinylchlorid-Homo- und/oder Copolymere,
B) 1 bis 80 Gew.-% eines oder mehrerer Weichmacher,
C) 1 bis 70 Gew.-% eines oder mehrerer Modifizierungsmittel,
D) 0 bis 60 Gew.-% eines oder mehrerer Pigmente und/oder Füllstoffe,
E) 0 bis 35 Gew.-% eines oder mehrerer Hilfs- und/oder Zusatzstoffe und
F) 0,1 bis 40 Gew.-% eines oder mehrerer Klebstoffe enthält,
wobei die Summe der Gewichtsanteile der Komponenten (A) bis (F) jeweils 100 Gew.-% beträgt.

4. Dichtungsmasse nach einem der Ansprüche 1 bis 3, dadurch gekennzeichnet, dass sie einen oder mehrere bei Raumtemperatur flüssige oder hochviskose Klebstoffe enthält.

5. Dichtungsmasse nach einem der Ansprüche 1 bis 4, dadurch gekennzeichnet, dass sie als Klebstoff Polybutylen und/oder Polyisobutylen enthält.

6. Dichtungsmasse nach einem der Ansprüche 1 bis 5, dadurch gekennzeichnet, dass sie im Wesentlichen phthalatfrei ist.

7. Dichtungsmasse nach einem der Ansprüche 1 bis 6, dadurch gekennzeichnet, dass sie ein Polyvinylchlorid-Homopolymer mit einem K-Wert von 60 bis 90 enthält.

8. Dichtungsmasse nach einem der Ansprüche 1 bis 7, dadurch gekennzeichnet, dass sie als Modifizierungsmittel epoxidiertes Sojaöl enthält.

9. Verfahren zur Herstellung von Dichtungsmassen nach einem der Ansprüche 1 bis 8 durch Mischen und ggf. Dispergieren der einzelnen Bestandteile.

10. Verfahren zum Herstellen von Verschlüssen, bei dem auf die Verschlüsse eine Dichtungsmasse aufgebracht und eingebrannt wird, dadurch gekennzeichnet, dass eine Dichtungsmasse nach einem der Ansprüche 1 bis 8 aufgebracht wird.

11. Verschluss für Verpackungsbehälter, dadurch gekennzeichnet, dass er nach einem Verfahren nach Anspruch 10 erhältlich ist.

12. Verwendung eines PVC-Plastisols, das 0,1 bis 40 Gew.-%, bezogen auf das Gesamtgewicht des Plastisols, eines oder mehrerer Klebstoffe enthält, als Dichtungsmasse.

## Revendications

1. Composé d'étanchéité à base de plastisols au PVC, dans lequel le composé d'étanchéité comprend de 0,1 à 40% en poids, par rapport au poids total du composé d'étanchéité, d'un ou plusieurs adhésifs.

2. Composé d'étanchéité suivant la revendication 1, qui comprend de 5 à 25% en poids, par rapport au poids total du composé d'étanchéité, d'un ou plusieurs adhésifs.

3. Composé d'étanchéité suivant l'une ou l'autre des revendications 1 et 2, qui comprend :
A) de 10 à 80% en poids d'un ou plusieurs homo- et/ou copolymères de chlorure de polyvinyle,
B) de 10 à 80% en poids d'un ou plusieurs plastifiants,
C) de 1 à 70% en poids d'un ou plusieurs modificateurs,
D) de 0 à 60% en poids d'un ou plusieurs pigments et/ou charges,
E) de 0 à 35% en poids d'un ou plusieurs agents auxiliaires et/ou additifs, et
F) de 0,1 à 40% en poids d'un ou plusieurs adhésifs,
la somme des proportions en poids des composants (A) à (F) étant dans chaque cas de 100% en poids.

4. Composé d'étanchéité suivant l'une quelconque des revendications 1 à 3, qui comprend un ou plusieurs adhésifs qui à la température ambiante sont liquides ou fortement visqueux.

5. Composé d'étanchéité suivant l'une quelconque des revendications 1 à 4, qui comprend du polybutène et/ou du polyiso-butène comme adhésif.

6. Composé d'étanchéité suivant l'une quelconque des revendications 1 à 5, qui est essentiellement exempt de phtalate.

7. Composé d'étanchéité suivant l'une quelconque des revendications 1 à 6, qui comprend un homopolymère de chlorure de polyvinyle ayant une valeur K de 60 à 90.

8. Composé d'étanchéité suivant l'une quelconque des revendications 1 à 7, qui comprend de l'huile de soja époxydée comme modificateur.

9. Procédé de préparation de composés d'étanchéité suivant l'une quelconque des revendications 1 à 8, par mélange et, en fonction des nécessités, dispersion des constituants individuels.

10. Procédé de production de fermetures, dans lequel un composé d'étanchéité est appliqué aux fermetures et cuit, dans lequel un composé d'étanchéité suivant l'une quelconque des revendications 1 à 8 est appliqué.

11. Fermeture pour récipients d'emballage, qui est obtenable par un procédé suivant la revendication 10.

12. Utilisation d'un plastisol au PVC qui comprend de 0,1 à 40% en poids, par rapport au poids total du plastisol, d'un ou plusieurs adhésifs, comme composé d'étanchéité.
